# EUROPEAN PATENT APPLICATION

(11) **EP 0 756 419 A1**
(43) Date of publication of application: **29.01.1997**
(21) Application number: 96112158.9
(22) Date of filing: 26.07.1996
(51) Int. Cl.: H04N 5/275

(54) **Method and apparatus for picking-up an image of a subject to be superimposed on base image**

(30) Priority: 28.07.1995 JP 193245/95
(71) Applicant: NIPPON HOSO KYOKAI, Tokyo (JP); MATSUSHITA ELECTRIC INDUSTRIAL CO., LTD., Kadoma-shi, Osaka-fu, 571 (JP); NHK ENGINEERING SERVICES, INC., Shibuya-ku, Tokyo (JP)
(72) Inventor: Ninomiya, Yuichi, c/o Nippon Hoso Kyokai, Setagaya-ku, Tokyo (JP); Enami, Kazumasa, c/o Nippon Hoso Kyokai, Setagaya-ku, Tokyo (JP); Noguchi, Hideo, c/o Nippon Hoso Kyokai, Setagaya-ku, Tokyo (JP); Mitsumine, Hideki, c/o Nippon Hoso Kyokai, Setagaya-ku, Tokyo (JP); Inoue, Seiki, c/o Nippon Hoso Kyokai, Setagaya-ku, Tokyo (JP); Kato, Tadoru, Shibuya-ku, Tokyo (JP); Hontani, Kunihiko, Settsu City, Osaka-fu (JP); Fujiwara, Masao, c/o NHK Eng. Services, Inc., Setagaya-ku, Tokyo (JP)
(74) Representative: Ritter und Edler von Fischern, Bernhard, Dipl.-Ing.

(57) **Abstract**

In a method of picking-up a subject image including a subject (1) to be superimposed on a base image by fitting, the subject is illuminated by a first illumination unit (4) arranged in front of the subject and is picked-up by an image pick-up camera (2), a subject image signal generated by the camera is stored on a record medium in a video recorder, then the subject is illuminated by a second illumination unit (5) arranged behind the subject and picked-up the same camera under the same condition except for lighting condition, and a shadow image signal thus generated by the camera is stored on a record medium in the video recorder. By processing the shadow image signal reproduced from the record medium, it is possible to obtain a key signal having a high quality without being affected by a surface condition of the subject.

## Description

### Background of the Invention

### Field of the Invention

The present invention generally relates to a technique for displaying an image, and more particularly relates to a technique for forming a composite image in which a subject is superimposed on a background or base image. More concretely the present invention relates to a method of picking-up a subject image including a subject to be superimposed on a base image, and an apparatus for carrying out said image picking-up method.

### Related Art Statement

There has been proposed a method of forming a composite image in which a subject is superimposed on a base image. In this method, it is required to produce a key signal for extracting an image of the subject from a subject image as well as removing a portion of the base image into which the image of subject is to be fit. In the known method, this key signal is derived from the subject image by utilizing a difference in a chromatic characteristic or hue, and the key signal thus obtained is called a chromakey signal. In this known chromakey method, a subject image is picked-up by placing the subject on a background whose hue or color is nearly complementary to that of the subject. For instance, when an image of a human being is to be superimposed on a base image, he or she is placed on a blue floor in front of a blue wall. It should be noted that blue is close to a complementary color of a skin color of the human being. A detail of such a chromakey method has been described in various publications. For instance, refer to a Japanese book, "Television Engineering Handbook", published from OHM on November 30, 1990, page 704.

In the known chromakey method, when a subject to be superimposed on a base image has a reflection property, blue light from the blue floor and wall is reflected by the subject and is made incident upon an image pick-up camera. Then, it is no more impossible to derive a key signal having a high quality. That is to say, when the subject is superimposed on the base image by utilizing such a chromakey signal, a part of the basic image appears in the subject, which degrades a quality of a composite image.

### Summary of the Invention

The present invention has for its object to provide a novel and useful method of picking-up a subject image including a subject to be superimposed on a base image, in which a key signal for extracting the subject from the subject image can be derived precisely in regardless of a surface condition of the subject.

According to the invention, a method of picking-up a subject image including a subject to be superimposed on a base image comprises the steps of:
picking-up a subject image illuminated with light impinging upon the subject from a front side of the subject by means of in image pick-up camera to derive a subject image signal;
recording said subject image signal on a record medium;
picking-up the subject by said image pick-up camera under the same condition under which said subject image is picked-up except for a lighting condition to derive a shadow image signal representing a shadow image of the subject, the subject being uniformly illuminated from a back of the subject; and
recording said shadow image signal on a record medium.

According to the invention, a method of picking-up a subject image including a subject to be superimposed on a base image comprises the steps of:
picking-up the subject by an image pick-up camera, said subject being uniformly illuminated from a back of the subject to derive a shadow image signal representing a shadow image of the subject;
recording said shadow image signal on a record medium;
picking-up the subject illuminated with light impinging upon the subject from a front side of subject by means of an image pick-up camera to derive a subject image signal; and
recording said subject image signal on a record medium.

In case of deriving a key signal for extracting the subject from the subject image and removing a portion of the base image into which the subject is to be fit, a level of the shadow image signal is compared with a threshold level. The threshold level can be determined such that the signal level of the shadow image of the subject becomes sufficiently lower than the threshold level. Then the subject image can be superimposed on the base image by using the thus obtained shadowkey signal in a known manner.

The present invention also relates to an apparatus for picking-up a subject image and a shadow image comprises:
a first illuminating means for illuminating the subject from a front side thereof;
a second illuminating means for illuminating the subject with substantially uniform light from a back of the subject;
a means for controlling said first and second illuminating means;
an image pick-up camera arranged in front of the subject and picking-up the subject to derive a subject image signal when the subject is illuminated by said first illuminating means as well as to derive a shadow image signal when the subject is illuminated by said second illuminating means; and
a means for recording said subject image signal and shadow image signal.

According to the invention, the subject image and shadow image of the subject are picked-up under the same condition except for illumination condition. That is to say, when the subject image is picked-up, the subject is illuminated from a front side in a usual manner, but when the shadow image is picked-up, the subject is uniformly illuminated from the back side thereof. Then, a key signal can be derived from the shadow image of the subject. Therefore, according to the invention, the key signal may be called a shadowkey signal.

The invention also relates to a method of superimposing a subject image on a base image by fitting, in which a key signal for extracting a subject portion can be simply and accurately derived.

According to the invention, a method of superimposing a subject image on a base image by fitting comprises the steps of:
picking-up the subject illuminated with light impinging upon the subject from a front side of the subject by means of an image pick-up camera to derive a subject image signal;
recording said subject image signal on a first record medium;
picking-up the subject by said image pick-up camera under the same condition under which said subject image is picked-up except for a lighting condition to derive a shadow image signal representing a shadow image of the subject, the subject being uniformly illuminated from a back of the subject;
recording said shadow image signal on a second record medium;
reproducing said subject image signal and shadow image signal from said first and second record medium in synchronism with each other;
deriving a key signal by processing said reproduced shadow image signal on a basis of an amplitude of the shadow image signal;
extracting a portion of said subject image signal by said key signal, said portion corresponding to said subject;
removing a portion of a base image signal representing said base image by said key signal, said portion corresponding to said subject; and
mixing said extracted portion of the subject image signal with said base image signal from which said portion corresponding to the subject has been removed to derive a composite image signal in which said subject image is superimposed on said base image.

### Brief Explanation of the Drawings

Fig. 1 is a block diagram showing an embodiment of the image pick-up apparatus according to the invention;
Figs. 2A, 2B and 2C represent base image, subject image and shadow image, and Fig. 2D denotes a key signal; and
Fig. 3 is a block diagram illustrating an embodiment of the image composing circuit.

### Description of the Preferred Embodiment

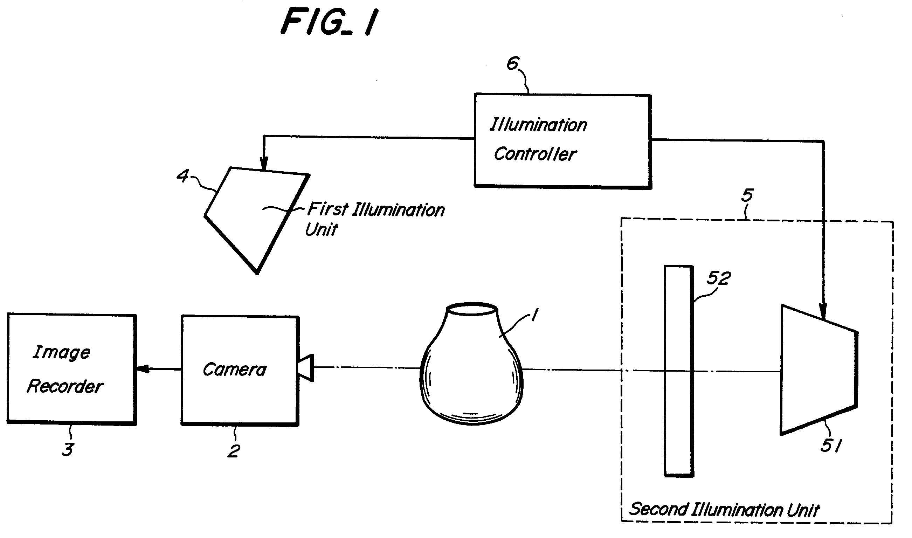

Fig. 1 is a block diagram showing an embodiment of the image pick-up apparatus according to the invention. The image pick-up apparatus comprises an image pick-up camera 2 for picking-up a subject 1 whose image has to be superimposed on a base or background image. An image signal produced by the camera 2 is supplied to an image recorder 3 and is recorded therein on a suitable image record medium such as video tape. The apparatus further comprises a first illumination unit 4 for illuminating the subject 1 from a front side thereof. The first illumination unit 4 may comprise one or more light sources. Behind the subject 1, there is arranged a second illumination unit 5 including one or more light sources 51 and a light diffusion plate 52. The second illumination means 5 illuminates the subject 1 from the back side thereof with substantially uniform light. The first and second illumination units 4 and 5 are controlled by an illumination controller 6. In the present embodiment, the image pick-up camera 2 and second illumination unit 5 are arranged such that an optical axis of an objective lens of the camera 2 is coincided with a center optical axis of the second illumination unit 5. It should be noted that the subject 1 is placed on the same optical axis.

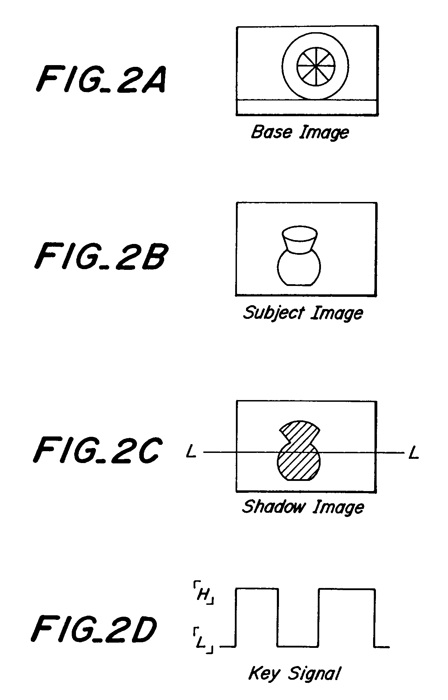

Now the operation of the image pick-up apparatus will be explained also with reference to Figs. 2A-2D. Fig. 2A represents a base or background image on which the subject is to be superimposed by fitting. In order to pick-up a subject image including the subject 1, only the first illumination unit 4 is driven and the subject 1 is illuminated by light emitted from the first illumination unit 4 from the front side thereof. A subject image signal produced from the image pick-up camera 2 is supplied to the video recorder 3 and is stored in a suitable record medium. Fig. 2B shows the thus picked-up and stored subject image.

In order to pick-up a shadow image of the subject 1, only the second illumination unit 5 is driven and the subject is illuminated with uniform light emitted by the second illumination unit 5 from the back side thereof. Then, a shadow image signal derived from the image pick-up camera 2 is supplied to the video recorder 3 and is stored in a record medium. Fig. 2C shows the thus picked-up and stored shadow image. It should be noted that upon composing a composite image, it is necessary to reproduce the subject image and shadow image in synchronization with each other, and therefore the subject image signal and shadow image are preferably stored in separate record medium.

According to the invention, the subject image and shadow image may be picked-up in any sequence. That is to say, the shadow image may be first picked-up and then the subject image may be picked-up. In this case, it is essential that these two image pick-up operations have to be carried out under the same condition except for the lighting condition. Therefore, a positional relationship between the camera 2 and the subject 1, a viewing direction of the image pick-up camera 2, and various conditions of an objective lens of the camera should not be changed between the picking-up of the subject image and the picking-up of the shadow image.

The light diffusion plate 52 is provided to diffuse light emitted by the light source 51, and may be made of an opaque or translucent acrylic resin. The diffusion plate 52 may be bent into a part of a cylinder surrounding the subject 1. Then, a space required for the image pick-up can be reduced.

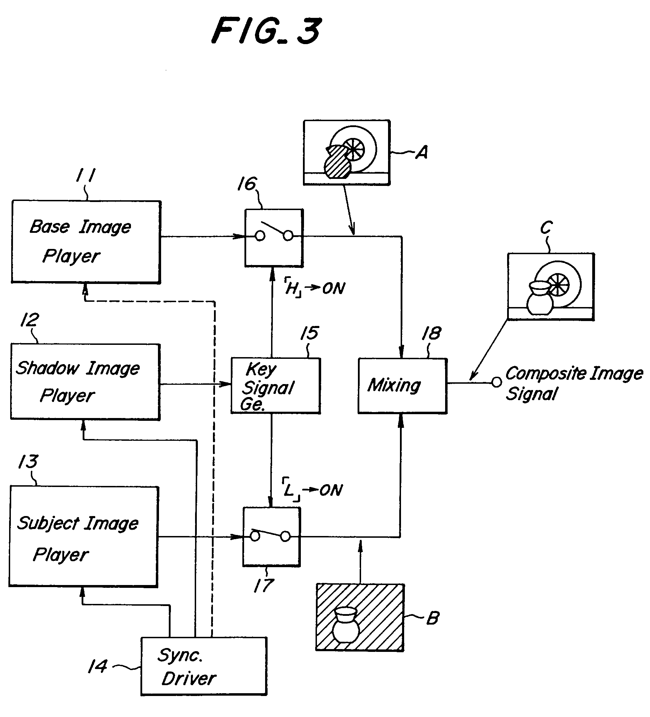

Fig. 3 is a block diagram representing an embodiment of a circuit for producing a composite image. The base image signal is supplied from a base image player 11, the shadow image signal is supplied from a shadow image player 12, and the subject image signal is supplied from a subject image player 13. These image players 11, 12 and 13 are controlled by a synchronizing driver 14 such that these image signals are generated in synchronism with each other. The shadow image signal is supplied to a shadowkey signal generator 15 and a shadowkey signal shown in Fig. 2D is derived. The shadowkey signal shown in Fig. 2D is obtained by processing an image signal along a line L-L in Fig. 2C.

The base image signal and subject image signal are supplied to first and second switches 16 and 17, respectively, and the shadowkey signal is also supplied to these switches as a control signal. When the shadowkey signal is in a high level H, the first switch 16 is made ON and the second switch 17 is made OFF, and when the shadowkey signal is in a low level L, the first switch 16 is made OFF and the second switch 17 is made ON. Therefore, from the first switch 16 there is derived the base image A from which a portion at which the subject is to be fit is removed, and from the second switch 17 there is derived the subject image signal B in which only the subject portion is extracted. Those signals are then are mixed in a mixing circuit 18 to obtain a composite image signal C, in which the image of the subject is fit in said vacant portion of the base image.

The present invention is not limited to the embodiment explained above, but many alternations and modifications may be conceived by those skilled in the art within the scope of the invention. For instance, in case of picking-up the subject image, an illumination means may be arranged on a side or back of the subject in addition to the illumination unit arranged in front of the subject. Further, in the above embodiment, the subject 1, image pick-up camera 2 and second illumination unit 5 are arranged on one and same straight line. However, according to the invention, they may be arranged on different lines.

As explained above, according to the invention, it is possible to derive a shadowkey signal having a high quality from the shadow image of the subject without being affected by a reflection property of the subject surface. That is to say, according to the invention, it is possible to obtain the shadowkey signal in regardless of the surface condition of subject. Therefore, according to the invention it is possible to obtain the composite image having a very high quality by using the shadowkey signal.

## Claims

1. A method of picking-up a subject image including a subject to be superimposed on a base image comprising the steps of:
picking-up a subject illuminated with light impinging upon the subject from a front side of the subject by means of an image pick-up camera to derive a subject image signal;
recording said subject image signal on a record medium;
picking-up the subject by said image pick-up camera under the same condition under which said subject image is picked-up except for a lighting condition to derive a shadow image signal representing a shadow image of the subject, the subject being uniformly illuminated from a back of the subject; and
recording said shadow image signal on a record medium.

2. A method of picking-up a subject image including a subject to be superimposed on a base image comprising the steps of:
picking-up the subject by an image pick-up camera, said subject being uniformly illuminated from a back of the subject to derive a shadow image signal representing a shadow image of the subject;
recording said shadow image signal on a record medium;
picking-up the subject by said image pick-up camera under the same condition under which said shadow image is picked-up except for a lighting condition to derive a subject image signal, said subject being illuminated with light impinging upon the subject from a front side of the subject; and
recording said subject image signal on a record medium.

3. A method according to claim 1 or 2, wherein said subject image and shadow image are picked-up by said image pick-up camera under such a condition that a positional relationship between the subject and the camera, a viewing direction of the camera and conditions of an objective lens of the camera are not changed between a picking-up of the subject image and a picking-up of the shadow image.

4. A method according to claim 3, wherein said picking-up of the shadow image is carried out by illuminating the subject from the back thereof with diffused light obtained by passing light emitted from at least one light source through a diffusion plate.

5. An apparatus for picking-up a subject image including a subject to be superimposed on a base image and a shadow image of the subject from which shadow image a shadowkey signal is derived comprising:
a first illuminating means for illuminating the subject from a front side thereof;
a second illuminating means for illuminating the subject with substantially uniform light from a back of the subject;
a means for controlling said first and second illuminating means;
an image pick-up camera arranged in front of the subject and picking-up the subject to derive a subject image signal when the subject is illuminated by said first illuminating means as well as to derive a shadow image signal when the subject is illuminated by said second illuminating means; and
a means for recording said subject image signal and shadow image signal.

6. An apparatus according to claim 5, wherein said image pick-up camera and second illuminating means are arranged such that an optical axis of the objective lens of the image pick-up camera is coincided with a center optical axis of said second illuminating means.

7. An apparatus according to claim 5 or 6, wherein said second illuminating means comprises at least one light source and a diffusion plate arranged in front of said light source and diffusing light emitted from said light source.

8. An apparatus according to claim 5, wherein said first illuminating means comprises at least one light source arranged in front of the subject.

9. A method of superimposing a subject image on a base image by fitting comprising the steps of:
picking-up the subject illuminated with light impinging upon the subject from a front side of the subject by means of an image pick-up camera to derive a subject image signal;
recording said subject image signal on a first record medium;
picking-up the subject by said image pick-up camera under the same condition under which said subject image is picked-up except for a lighting condition to derive a shadow image signal representing a shadow image of the subject, the subject being uniformly illuminated from a back of the subject;
recording said shadow image signal on a second record medium;
reproducing said subject image signal and shadow image signal from said first and second record medium in synchronism with each other;
deriving a key signal by processing said reproduced shadow image signal on a basis of an amplitude of the shadow image signal;
extracting a portion of said subject image signal by said key signal, said portion corresponding to said subject;
removing a portion of a base image signal representing said base image by said key signal, said portion corresponding to said subject; and
mixing said extracted portion of the subject image signal with said base image signal from which said portion corresponding to the subject has been removed to derive a composite image signal in which said subject image is superimposed on said base image.

10. A method of superimposing a subject image on a base image by fitting comprising the steps of:
picking-up the subject uniformly illuminated from a back of the subject by an image pick-up camera to derive a shadow image signal representing a shadow image of the subject;
recording said shadow image signal on a first record medium;
picking-up the subject by said image pick-up camera under the same condition under which said shadow image of the subject is picked-up except for a lighting condition to derive a subject image signal, said subject being illuminated from a front side of the subject;
recording said subject image signal on a second record medium;
reproducing said shadow image signal and subject image signal from said first and second record medium in synchronism with each other;
deriving a key signal by processing said reproduced shadow image signal on a basis of an amplitude of the shadow image signal;
extracting a portion of said subject image signal by said key signal, said portion corresponding to said subject;
removing a portion of a base image signal representing said base image by said key signal, said portion corresponding to said subject; and
mixing said extracted portion of the subject image signal with said base image signal from which said portion corresponding to the subject has been removed to derive a composite image signal in which said subject image is superimposed on said base image.
